(19) Europäisches Patentamt / European Patent Office / Office européen des brevets

(11) **EP 2 937 503 B1**

(12) **EUROPÄISCHE PATENTSCHRIFT**

(45) Veröffentlichungstag und Bekanntmachung des Hinweises auf die Patenterteilung:
**17.02.2021 Patentblatt 2021/07**

(21) Anmeldenummer: **15157923.2**

(22) Anmeldetag: **06.03.2015**

(51) Int Cl.:
*E05G 1/024* (2006.01)     *B01L 1/00* (2006.01)
*A62C 3/00* (2006.01)

(54) **BRANDSCHUTZSCHRANK, INSBESONDERE SICHERHEITSSCHRANK**

FIRE RESISTANT CABINET, IN PARTICULAR SECURITY CABINET

ARMOIRE ANTI-FEU, EN PARTICULIER ARMOIRE DE SÉCURITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.04.2014 DE 202014101935 U**

(43) Veröffentlichungstag der Anmeldung:
**28.10.2015 Patentblatt 2015/44**

(73) Patentinhaber: **Düperthal Sicherheitstechnik GmbH & Co.KG**
**63791 Karlstein (DE)**

(72) Erfinder: **Backhaus, Frank**
**31051 Herford (DE)**

(74) Vertreter: **Nunnenkamp, Jörg et al**
**Andrejewski - Honke**
**Patent- und Rechtsanwälte Partnerschaft mbB**
**An der Reichsbank 8**
**45127 Essen (DE)**

(56) Entgegenhaltungen:
**DE-B4-102011 000 258     DE-U1- 29 500 142**
**GB-A- 2 071 636**

EP 2 937 503 B1

**Beschreibung**

Die Erfindung betrifft einen Brandschutzschrank, insbesondere Sicherheitsschrank und vorzugsweise einen Gefahrstoffschrank, mit einem Korpus, und mit wenigstens einer an den Korpus angeschlossenen Tür, wobei der Korpus größtenteils einen Sandwichaufbau mit wenigstens einer nach innen weisenden Holzwerkstoffschicht und einer nach außen weisenden Feuerschutzschicht aufweist, und wobei die Feuerschutzschicht als eine oder mehrere Wärmedämmplatten auf mineralischer Basis ausgebildet ist.

Brandschutzschränke, insbesondere Sicherheitsschränke und vorzugsweise Gefahrstoffschränke oder auch Laborschränke, Umweltschränke und dergleichen werden in der Regel eingesetzt, um sicherheitsrelevante Produkte wie Chemikalien, brennbare Flüssigkeiten etc. zu bevorraten. Dabei kommt es unter anderem darauf an, dass der fragliche Brandschutzschrank und insbesondere Sicherheitsschrank im Schließbetrieb zuverlässig verschlossen wird. Dafür sorgt typischerweise eine Selbstschließeinrichtung. Außerdem müssen Anforderungen des Feuerschutzes erfüllt werden.

An dieser Stelle werden die einzelnen Brandschutzschränke nach ihren Feuerwiderstandsdauern unterschieden, die entsprechend der Vorschrift DIN EN 14470 klassifiziert werden. Hierbei wird der betreffende Schrank von außen beflammt und gleichzeitig seine Temperatur im Inneren gemessen. Entsprechend der vorgenannten DIN-Normen werden insgesamt vier Stufen voneinander unterschieden, nämlich eine Feuerwiderstandsdauer von 15 Min., von 30 Min., von 60 Min. und schließlich von 90 Min..

Die Feuerwiderstandsdauer ist von besonderer Bedeutung für solche Sicherheitsschränke, wenn im Inneren brennbare Flüssigkeiten oder Druckgasflaschen bevorratet werden. Denn je höher die Feuerwiderstandsdauer bemessen ist, desto länger und besser sind die bevorrateten Stoffe im Brandfall geschützt.

Im Stand der Technik nach der DE 10 2011 000 258 B4 wird ein Schrank und insbesondere Sicherheitsschrank beschrieben, bei dem jede Seitenwandung des Korpus eine Verbundplatte aufweist. Die Verbundplatte besteht aus einer inneren Platte, einer äußeren Platte sowie zusätzlich einer Vakuumdämmplatte zwischen der inneren und der äußeren Platte. Bei einer solchen Vakuumdämmplatte handelt es sich um eine Platte mit einem Kern aus einem Salz oder Salzgemisch innerhalb einer metallisierten Kunststofffolie.

Dieses Salz- oder Salzgemisch kann beispielsweise so ausgelegt werden, dass es bei 30 °C schmilzt und dabei sehr viel Energie aufnimmt, wie dies ergänzend in der DE 10 2008 052 329 A1 beschrieben wird. An dieser Stelle geht es ebenfalls um einen gattungsgemäßen Schrank, der vorliegend als Brandschutzschrank ausgebildet ist und eine Feuerwiderstandsdauer von 30 Min. erreicht. Die in beiden Fällen eingesetzten Vakuumdämmplatten verfügen aufgrund des im Inneren befindlichen und meistens mechanisch hochverdichteten Salzes über ein hohes Gewicht.

Tatsächlich erreichen entsprechend aufgebaute Sicherheitsschränke in beispielsweise zweiflügliger Ausgestaltung und unter Berücksichtigung von Standardabmessungen ein Gewicht, welches im Regelfall deutlich oberhalb von 350 kg und zumeist sogar mehr als 400 kg beträgt. Als Folge hiervon ergeben sich besondere Probleme nicht nur beim Transport und der Aufstellung, sondern sogar auch schon bei der Montage und Herstellung. Denn die einzelnen den Korpus bildenden Wände sind so schwer und massiv, dass sie sich kaum von einem einzigen Montagewerker handhaben und manipulieren lassen. Das heißt, zumeist sind wenigstens zwei Bedienpersonen für den Zusammenbau und die Montage erforderlich.

Beim gattungsbildenden Stand der Technik nach der DE 295 00 142 U1 hat man bereits das Ziel verfolgt, einen konstruktiv einfachen Aufbau und geringes Gewicht sowie hohe Feuerfestigkeit bei einem hitze- oder feuerbeständigen Schrank zu erreichen. Dazu greift die bekannte Lehre allerdings auf einen Innenkorpus zurück, welcher als selbsttragendes Dämmgehäuse ausgebildet ist. Bei dem Außenkorpus handelt es sich um ein Blechgehäuse wie einen handelsüblichen Werkzeugschrank oder Metallspind. Auch der Außenkorpus ist als selbsttragender Schrank ausgelegt. Bedingt durch die Montage und Fertigungstoleranzen verbleiben zwischen dem Innenkorpus und Außenkorpus Zwischenräume, die durch das Einbringen von sich verfestigenden Schäumen ausgefüllt werden.

Der Erfindung liegt das technische Problem zugrunde, einen gattungsgemäßen Brandschutzschrank so weiterzuentwickeln, dass bei überwiegend gleichbleibend erreichter Feuerwiderstandsdauer das Gewicht deutlich gegenüber bisher bekannten Ausführungsformen reduziert ist.

Zur Lösung dieser technischen Problemstellung ist ein gattungsgemäßer Brandschutzschrank und insbesondere Sicherheitsschrank im Rahmen der Erfindung dadurch gekennzeichnet, dass der Korpus außenseitig mit einer Stahlblechhülle verkleidet und vollständig sowie abschließend aus dem Sandwichaufbau und der Stahlblechhülle ohne weitere Schichten sowie abstandsfrei aufgebaut ist, das heißt, von innen nach außen gesehen sind die Holzwerkstoffschicht, die Wärmedämmplatte(n) und abschließend die Stahlblechhülle realisiert.

Erfindungsgemäß setzt sich der Sandwichaufbau des Brandschutzschrankes folglich aus einerseits der Holzwerkstoffschicht und andererseits der nach außen weisenden Feuerschutzschicht in Gestalt der einen oder der mehreren Wärmedammplatten auf mineralischer Basis zusammen. Hierbei geht die Erfindung zunächst einmal von der Erkenntnis aus, dass solche Wärmedämmplatten auf mineralischer Basis typischerweise über eine Dichte verfügen, die im Allgemeinen deutlich unterhalb von 800 gr/m$^3$ und vorzugsweise sogar unterhalb von 600 kg/m$^3$ angesiedelt ist.

Die demgegenüber im Stand der Technik an dieser Stelle eingesetzten wasserhaltigen Mineralbauplatten, vorzugsweise Gipskartonplatten, weisen im Unterschied dazu hohe Dichten auf, die im Allgemeinen mehr als 800 kg/m$^3$ und bis zu 12000 kg/m$^3$ betragen können. Das heißt, der Ersatz der wasserhaltigen Mineralbauplatten durch die erfindungsgemäß eingesetzten Wärmedämmplatten auf mineralischer Basis und insbesondere auf Silikatbasis führt zu einer signifikanten Gewichtseinsparung für die auf diese Weise realisierte Feuerschutzschicht.

Tatsächlich werden an dieser Stelle Gewichtseinsparungen von mehr als 30 % und insbesondere sogar von bis zu 50 % beobachtet, wenn man das Gesamtgewicht des erfindungsgemäßen Korpus mit demjenigen eines herkömmlichen Korpus bei gleichen Abmessungen vergleicht. Als Folge hiervon kann dann auch das Gesamtgewicht der auf diese Weise hergestellten Brandschutzschränke deutlich gesenkt werden. Tatsächlich lassen sich Gewichte realisieren, die im Bereich von ca. 250 kg bis 270 kg bei zweiflügliger Ausgestaltung und unter Berücksichtigung von Standardabmessungen angesiedelt sind, wohingegen die bisherigen Sicherheitsschränke ein Gewicht aufweisen, welches im Regelfall deutlich oberhalb von 350 kg und meist sogar mehr als 400 kg beträgt. Das heißt, es ist mit einer Gewichtseinsparung für den gesamten Brandschutzschrank von mehr als 20 % und vorzugsweise sogar von mehr als 30 % zu rechnen.

Die Wärmedämmplatte zur Realisierung der Feuerschutzschicht ist insgesamt auf Silikatbasis basierend ausgelegt. Dabei meint Wämedämmplatte im vorstehendem Sinne eine solche, deren spezifische Wärmeleitfähigkeit unterhalb von 0,05 W/(m·K) und vorzugsweise unterhalb von 0,04 W/(m·K) angesiedelt ist. Tatsächlich enthält die Wärmedämmplatte neben Silikatkristallen regelmäßig ein faserförmiges Material und zusätzlich ein Bindemittel. Bei dem faserförmigen Material handelt es sich um Verstärkungsfasern. Diese Verstärkungsfasern können aus beispielsweise Zellulose aufgebaut sein. Grundsätzlich sind aber auch Glasfasern, Kohlefasern oder auch Kunststofffasern denkbar. In der Regel kommen jedoch Zellulosefasern zum Einsatz, weil diese besonders kostengünstig zur Verfügung stehen.

Bei dem eingesetzten Bindemittel kann es sich um grundsätzlich jedwedes geeignetes Bindemittel handeln, insbesondere ein solches, das für hohe Temperaturen geeignet ist wie Zement, Wasserglas oder dergleichen. Als Silikat empfiehlt die Erfindung den Einsatz eines natürlichen Calciumsilikates, wie beispielsweise Wollastonit. Zusätzlich können weitere Füllmaterialien wie Siliziumdioxid, Kaliumoxid, Dolomit etc. Verwendung finden.

Die Herstellung der erfindungsgemäßen Wärmedämmplatte auf mineralischer Basis und insbesondere Silikatbasis, vorzugsweise die Herstellung von Silikatbrandschutzplatten und insbesondere zementgebundenen Silikatbrandschutzplatten, erfolgt dabei so, dass das mineralische Silikat als Rohmaterial, die Füllmaterialien sowie die Verstärkungsfasern und gegebenenfalls das Bindemittel gemischt und bei gleichzeitigem Wasserentzug pressgeformt werden. Anschließend erfolgt die Formgebung durch beispielsweise Kalandrieren, wie dies auch von der Papierverarbeitung bekannt ist. Die auf diese Weise hergestellten Wärmedämmplatten auf mineralischer Basis und insbesondere auf Silikatbasis, vorzugsweise die Silikatbrandschutzplatten und besonders bevorzugt die zementgebundenen Silikatbrandschutzplatten, zeichnen sich durch eine hohe spezifische Belastbarkeit, ein geringes Gewicht und insbesondere die für den vorliegenden Anwendungsfall erforderliche Hitzebeständigkeit aus.

Tatsächlich erklärt sich die Feuerbeständigkeit der erfindungsgemäß eingesetzten Wärmedämmplatten dergestalt, dass physische Beschädigungen wie Risse oder Schichtabblätterungen nur in geringem Maße auftreten. Generell lassen sich solche Wärmedämmplatten als nicht entflammbar einstufen, wie dies in entsprechenden Normen hinterlegt und beschrieben wird. Bezug genommen sei beispielhaft auf einschlägige britische Normen, wie sie in der als Referenz zu betrachtenden DE 601 03 688 T2 im dortigen Abschnitt [0006] näher beschrieben werden. In der besagten Vorveröffentlichung wird auch der Detailaufbau einer Calciumsilikatplatte und ein Verfahren zu seiner Herstellung beschrieben, auf das ausdrücklich verwiesen sei.

Die Holzwerkstoffschicht setzt sich im Allgemeinen aus einer oder mehreren Holzwerkstoffplatten zusammen. Dabei ist die Auslegung insgesamt so getroffen, dass die fragliche Holzwerkstoffschicht die gesamte Innenwandung des erfindungsgemäßen Brandschutzschrankes definiert. Auf diese Weise wird die gewünschte Stabilität des Brandschutzschrankes eingestellt und sichergestellt. Denn die Holzwerkstoffschicht bzw. die miteinander verbundenen Holzwerkstoffplatten bilden letztlich das das gesamte Gewicht des fraglichen Brandschutzschrankes tragende Gerüst.

Die Dichte der an dieser Stelle eingesetzten einen oder der mehreren Holzwerkstoffplatten ist regelmäßig unterhalb von 800 kg/m$^3$ angesiedelt. Außerdem verfügt die Holzwerkstoffplatte typischerweise über eine Materialstärke, welche in etwa ein Drittel bis zur Hälfte der Materialstärke der Wärmedämmplatte entspricht. Auch diese Maßnahme trägt insgesamt dazu bei, dass der erfindungsgemäße Brandschutzschrank mit deutlichen Gewichtsvorteilen gegenüber dem Stand der Technik ausgerüstet ist.

Als denkbare Holzwerkstoffplatten haben sich Spanplatten als besonders günstig erwiesen. Solche Spanplatten können grundsätzlich auch schwer entflammbar ausgelegt werden. Primär kommt der nach innen weisenden Holzwerkstoffschicht respektive den sie definierenden Holzwerkstoffplatten nicht nur die gesamte tragende Funktion des erfindungsgemäßen Brandschutzschrankes zu. Sondern die Holzwerkstoffplatten fungieren auch als Befestigungselemente für die Anbringung von Einbauten, die Aufnahme von einem oder mehreren Lagern für die Tür etc..

Die die Feuerschutzschicht definierende Wärmedämmplatte auf mineralischer Basis bzw. Silikatbasis wird im Allgemeinen mit der zugehörigen Holzwerkstoffplatte respektive der Holzwerkstoffschicht verbunden. Dabei können typische Verbindungstechniken eingesetzt werden. Beispielsweise lässt sich die Wärmedämmplatte mit der zugehörigen Holzwerkstoffplatte durch Schrauben koppeln. Alternativ oder zusätzlich kann die Wärmedämmplatte auch mit Hilfe eines Adhäsivmittels mit der zugehörigen Holzwerkstoffplatte gekoppelt werden. Das ist möglich, weil solche Wärmedämmplatten auf Silikatbasis und insbesondere zementgebundene Silikatbrandschutzplatten eine hohe spezifische Belastbarkeit aufweisen und sich letztlich ähnlich wie Beton bearbeiten lassen. Das heißt, die fraglichen Wärmedämmplatten können gesägt, gebohrt oder sonst wie in gewünschter Art und Weise bearbeitet werden.

Der Korpus setzt sich meistens aus Seiten-, Rücken-, Kopf- und Bodenwänden zusammen. Dabei ist die Auslegung so getroffen, dass wenigstens jede Seitenwand den zuvor beschriebenen Sandwichaufbau aus der Holzwerkstoffschicht bzw. den Holzwerkstoffplatten und der daran festgelegten einen oder den mehreren Wärmedämmplatten aufweist. Meistens sind neben den Seitenwänden zusätzlich auch die Rückenwand sowie die Kopfwand mit dem Sandwichaufbau ausgerüstet. Als Folge hiervon verfügt bei dem erfindungsgemäßen Brandschutzschrank lediglich die Bodenwand des Korpus über einen anderen und abweichenden Aufbau. An dieser Stelle hat es sich nämlich bewährt, wenn sich die Feuerschutzschicht der Bodenwand aus einer oder mehreren Mineralbauplatten anstelle der Wärmedämmplatte auf Silikatbasis zusammensetzt.

Die an den Korpus angeschlossene Tür kann als Drehflügeltür, Falttür oder dergleichen ausgebildet sein. Darüber hinaus sind Ausgestaltungen mit lediglich einer Tür, mit zwei Türen oder noch mehr Türen denkbar und werden von der Erfindung umfasst. Außerdem verfügt jede der Türen meistens über den bereits beschriebenen Sandwichaufbau aus der Holzwerkstoffschicht bzw. den Holzwerkstoffplatten und der daran festgelegten einen oder den mehreren Wärmedämmplatten. Das heißt, der Aufbau der Tür ist vergleichbar wie derjenige der Seitenwand des Korpus bzw. der Seitenwände, Rückenwand und Kopfwand des Korpus. Außerdem verfügt die Tür meistens noch über eine außenseitige Stahlblechhülle.

Der Korpus ist außenseitig und erfindungsgemäß mit der Stahlblechhülle verkleidet. Die Stahlblechhülle erfüllt dabei größtenteils eine optische Funktion und sorgt für ein ansprechendes Äußeres. Zugleich schützt die Stahlblechhülle den im Innern befindlichen Sandwichaufbau vor Beschädigungen. Dabei setzt sich die Stahlblechhülle im Allgemeinen aus einzelnen miteinander gekoppelten Stahlblechplatten zusammen. Zu diesem Zweck können die einzelnen Stahlblechplatten miteinander vernietet werden. Hier haben sich besonders Aluminiumnieten als günstig erwiesen. Denn solche Aluminiumnieten schmelzen bei Erreichen der Schmelztemperatur von Aluminium (ca. 600 °C) auf, so dass die Stahlblechplatten bei Feuereinwirkung problemlos expandieren können. Dadurch werden Verspannungen, Risse etc. in der Stahlblechhülle insbesondere bei einer Feuereinwirkung vermieden.

Um das Gewicht des erfindungsgemäßen Brandschutzschrankes zu beschränken, ist der Korpus erfindungsgemäß vollständig und abschließend aus dem Sandwichaufbau sowie der Stahlblechhülle ohne weitere Schichten aufgebaut. Das heißt, es reicht aus, wenn von innen nach außen gesehen die Holzwerkstoffschicht, die Wärmedämmplatte auf Silikatbasis und schließlich die Stahlblechhülle mit den zuvor beschriebenen Vorgaben realisiert sind, ohne dass weitere zwischengeschaltete Schichten, Bauplatten etc. erforderlich wären. Gleichwohl lässt sich mit einem solchen und erfindungsgemäß aufgebauten Brandschutzschrank eine Feuerwiderstandsfähigkeit von F90 erreichen. Hierzu korrespondiert die gewünschte Feuerwiderstandsdauer von wenigstens 90 Min.. Das alles gelingt im Gegensatz zum Stand der Technik beispielsweise nach der DE 10 2011 000 258 B4 mit deutlich einfacherem Aufbau und unter Verzicht auf zusätzliche (schwere) Vakuumdämmplatten.

Folglich sind erfindungsgemäß die Kosten und das Gewicht der solchermaßen hergestellten und aufgebauten Brandschutzschränke verringert. Auch die Montage lässt sich einfacher als bisher bewerkstelligen, weil die einzelnen den Korpus bildenden Wände praktisch ausschließlich von einer Person bei der Montage verarbeitet werden können. Das alles gelingt bei nach wie vor hoher Feuerwiderstandsfähigkeit, großer mechanischer Stabilität und zugleich ansprechendem Äußeren. Hierin sind die wesentlichen Vorteile zu sehen.

Im Folgenden wird die Erfindung anhand einer lediglich ein Ausführungsbeispiel darstellenden Zeichnung näher erläutert; es zeigen:

Fig. 1    den erfindungsgemäßen Brandschutzschrank in einer perspektivischen Übersicht,

Fig. 2    einen Schnitt durch den Gegenstand nach Fig. 1 im Bereich einer Seitenwand,

Fig. 3    einen Schnitt durch den Gegenstand nach Fig. 1 im Bereich der Kopfwand und

Fig. 4    einen Schnitt durch den Gegenstand nach Fig. 1 im Bereich der Bodenwand.

In den Figuren ist ein Brandschutzschrank, vorliegend ein Sicherheitsschrank dargestellt. Bei dem Sicherheitsschrank handelt es sich um einen Gefahrstoffschrank, in dessen Inneren üblicherweise flüssige Gefahrstoffe wie Chemikalien aufbewahrt und bevorratet werden können. Zu diesem Zweck verfügt der dargestellte Brandschutzschrank über einen Korpus 1, 2, 3, 4, an den im gezeigten Beispielfall zwei Türen 5 angeschlossen sind. Bei den Türen 5 handelt es sich um Drehflügeltüren.

Nicht ausdrücklich dargestellt ist ein Selbstschließmechanismus, welcher bei Überschreiten einer vorgegebenen Temperatur dafür sorgt, dass die beiden Türen bzw. Drehflügeltüren 5 geschlossen werden. Der Selbstschließmechanismus arbeitet in bekannter Art und Weise mit einem Schmelzlot, das bei Überschreiten einer bestimmten Temperatur schmilzt und dadurch einen federbeaufschlagten Schließvorgang der beiden Türen bzw. Drehflügeltüren 5 initiiert. Bei den Türen 5 handelt es sich im Ausführungsbeispiel um Drehflügeltüren 5, wenngleich grundsätzlich auch Falttüren oder andere Türen an dieser Stelle realisiert werden können. Zu erkennen ist noch eine Gasabsaugung 6, welche dafür sorgt, dass eventuell im Innern des Korpus 1, 2, 3, 4 entstehende Dämpfe der dort bevorrateten Chemikalien oder allgemein Gefahrstoffe abgesaugt werden.

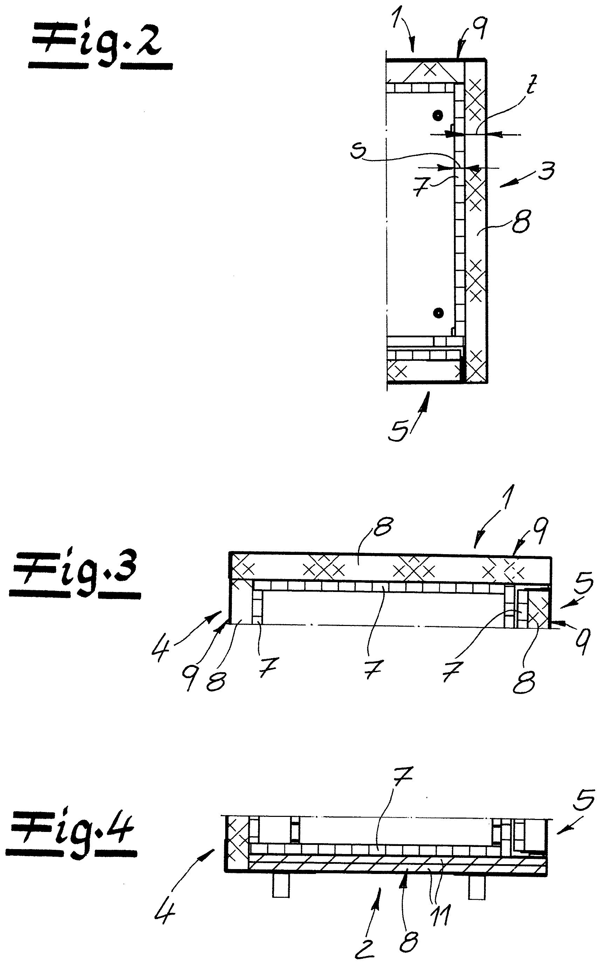

Der Korpus 1, 2, 3, 4 setzt sich im Ausführungsbeispiel aus einer Kopfwand 1, einer Bodenwand 2, zwei Seitenwänden 3 und schließlich einer Rückwand bzw. Rückenwand 4 zusammen. Anhand der Schnittdarstellungen in den Fig. 2 bis 4 erkennt man, dass die beiden Seitenwände 3 ebenso wie die Kopfwand 1 und schließlich die Rückenwand 4 mit einem größtenteils übereinstimmenden Wandaufbau ausgerüstet sind. Demgegenüber weist lediglich die Bodenwand 2 einen geringfügig abweichenden Wandaufbau auf, wie dies nachfolgend noch näher im Detail beschrieben wird.

Der Korpus 1, 2, 3, 4 verfügt größtenteils über einen Sandwichaufbau. Tatsächlich sind im Ausführungsbeispiel und nicht einschränkend die beiden Seitenwände 3, die Kopfwand 1 und die Rückenwand 4 mit dem fraglichen und nachfolgend im Detail noch näher zu beschreibenden Sandwichaufbau ausgerüstet. Der Sandwichaufbau setzt sich aus wenigstens einer nach innen bzw. ins Innere des Korpus 1, 2, 3, 4 weisenden Holzwerkstoffschicht 7 einerseits und einer nach außen weisenden Feuerschutzschicht 8 andererseits zusammen. Erfindungsgemäß ist die Feuerschutzschicht 8 als eine oder mehrere Wärmedämmplatten 8 auf mineralischer Basis ausgebildet.

Tatsächlich handelt es sich bei der betreffenden Wärmedämmplatte 8 um eine solche auf Silikatbasis und vorzugsweise eine Silikatbrandschutzplatte. Da vorliegend die einzelnen Silikatkristalle zur Herstellung der Wärmedämmplatte 8 zusammen mit einem faserförmigen Material durch Zement als Bindemittel miteinander verbunden bzw. gebunden werden, handelt es sich im Ausführungsbeispiel und nicht einschränkend bei der Wärmedämmplatte 8 insgesamt um eine zementgebundene Silikatbrandschutzplatte. Als faserförmiges Material bei der Herstellung der Wärmedämmplatte 8 hat sich Zellulose als Verstärkungsfasern bewährt.

Der Aufbau ist insgesamt so gewählt, dass die Wärmedämmplatte 8 benachbart zur Holzwerkstoffschicht 7 angeordnet ist. Zusätzlich erkennt man noch eine den Korpus 1, 2, 3, 4 außenseitig verkleidende Stahlblechhülle 9.

Auch die Türen bzw. Drehflügeltüren 5 verfügen über einen vergleichbaren Sandwichaufbau mit einer nach innen weisenden Holzwerkstoffschicht 7, daran anschließend der Wärmedämmplatte 8 und schließlich der äußeren Stahlblechhülle 9. Tatsächlich ist der Detailaufbau der Türen bzw. Drehflügeltüren 5 exakt so gestaltet, wie derjenige der beiden Seitenwände 3, der Kopfwand 1 und schließlich der Rückenwand 4 des Korpus 1, 2, 3, 4. Das gilt selbstverständlich nur beispielhaft.

Man erkennt, dass die Holzwerkstoffschicht 7 eine Materialstärke s aufweist, die in etwa ein Drittel bis zur Hälfte der Materialstärke t der Wärmedämmplatte 8 entspricht. Das heißt, es gilt:

$$s \sim 0{,}3 \text{ bis } 0{,}5\ t.$$

In der Praxis realisierte Werte für s und t betragen in etwa $s \approx 20$ mm bis 30 mm und $t \approx 50$ mm bis 90 mm. Wie einleitend bereits erläutert, ist die Wärmedämmplatte 8 insgesamt hitzebeständig ausgelegt und verfügt typischerweise über eine Dichte von weniger als 800 kg/m$^3$. Ganz besonders bevorzugt ist die Dichte sogar unterhalb von 600 kg/m$^3$ angesiedelt. Demgegenüber weist die Holzwerkstoffschicht 7 eine Dichte von bis zu 800 kg/m$^3$ auf.

Durch die jeweils beschriebenen Materialstärken kann das Gesamtgewicht des dargestellten Brandschutzschrankes auf deutlich unterhalb von 300 kg reduziert werden, vorzugsweise sogar auf weniger als 270 kg. Demgegenüber weisen herkömmliche Brandschutzschränke vergleichbarer Abmessungen an dieser Stelle ein Gewicht von mehr als 350 kg bis zu 400 kg bei ansonsten gleichem Aufbau und vergleichbarem Volumen auf. Das heißt, es wird durch den erfindungsgemäßen Aufbau eine Gewichtsreduktion von ca. 20 %, insbesondere sogar von 30 % und mehr des Gesamtgewichts des Brandschutzschrankes beobachtet.

Die Holzwerkstoffschicht 7 bzw. die sie definierenden Holzwerkstoffplatten stellen das primär tragende Element des dargestellten Brandschutzschrankes dar. Demgegenüber kommt den Wärmedämmplatten 8 keine tragende Funktion zu. Tatsächlich sind die einzelnen Wärmedämmplatten 8 mit den Holzwerkstoffplatten bzw. der zugeordneten Holzwerkstoffplatte 7 oder allgemein der Holzwerkstoffschicht 7 verbunden. Das kann beispielsweise durch Schrauben und/oder ein zwischengeschaltetes Adhäsivmittel erfolgen.

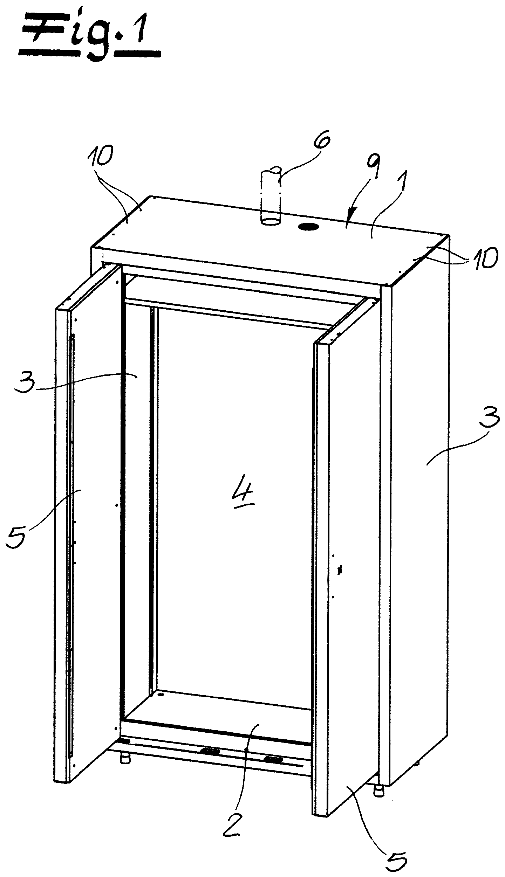

Die Stahlblechhülle 9 setzt sich ihrerseits aus einzelnen sowie miteinander gekoppelten Stahlblechplatten zusammen. Dabei sind die Stahlblechplatten regelmäßig durch Nieten 10 miteinander verbunden, die man insbesondere in der Fig. 1 erkennt. Bei den Nieten 10 handelt es sich im Ausführungsbeispiel um Aluminiumnieten, die bei der Schmelztemperatur von Aluminium schmelzen und folglich ab dieser Temperatur die einzelnen Stahlblechplatten freigeben. Die Stahlblechplatten können sich im Anschluss daran frei bewegen und insbesondere frei hinsichtlich ihrer Länge expandieren. Auf diese Weise entstehen selbst bei extremen Temperaturen praktisch keine Spannungen und Risse und die Grundstruktur des dargestellten Brandschutzschrankes wird beibehalten.

Anhand der Fig. 4 erkennt man, dass die Bodenwand 2 mit einer Feuerschutzschicht 8 ausgerüstet ist, die sich im Ausführungsbeispiel aus zwei Mineralbauplatten 11 zusammensetzt. Bei den Mineralbauplatten 11 handelt es sich um Gipskartonplatten bzw. Feuerschutzgipskartonplatten.

Der Korpus 1, 2, 3, 4 verfügt bei dem erfindungsgemäßen Brandschutzschrank vollständig und abschließend über den beschriebenen Sandwichaufbau aus der Holzwerkstoffschicht 7 und der Feuerschutzschicht 8, und zwar ohne dass weitere Schichten erforderlich wären und schließlich der den Korpus 1, 2, 3, 4 umgebenden Stahlblechhülle 9. Dadurch lassen sich nicht nur geringe Wandstärken realisieren, sondern kann insbesondere durch den Rückgriff auf die besonders leichte Wärmedämmplatte 8 das Gesamtgewicht wie beschrieben signifikant reduziert werden. Gleichwohl verfügt der dargestellte Brandschutzschrank über eine Feuerwiderstandsfähigkeit von 90 Min..

**Patentansprüche**

1.   Brandschutzschrank, insbesondere Sicherheitsschrank, vorzugsweise Gefahrstoffschrank, mit einem Korpus (1, 2, 3, 4), und mit wenigstens einer an den Korpus (1, 2, 3, 4) angeschlossenen Tür (5), wobei der Korpus (1, 2, 3, 4) größtenteils einen Sandwichaufbau mit wenigstens einer nach innen weisenden Holzwerkstoffschicht (7) und einer nach außen weisenden Feuerschutzschicht (8) aufweist, und wobei die Feuerschutzschicht (8) als eine oder mehrere Wärmedämmplatten (8) auf mineralischer Basis ausgebildet ist,
     **dadurch gekennzeichnet, dass**
     der Korpus (1, 2, 3, 4) außenseitig mit einer Stahlblechhülle (9) verkleidet und vollständig sowie abschließend aus dem Sandwichaufbau und der Stahlblechhülle (9) ohne weitere Schichten sowie abstandsfrei aufgebaut ist, das heißt, von innen nach außen gesehen sind die Holzwerkstoffschicht (7), die Wärmedämmplatte(n) (8) und abschließend die Stahlblechhülle (9) realisiert.

2.   Schrank nach Anspruch 1, **dadurch gekennzeichnet, dass** die Wärmedämmplatte (8) auf Silikatbasis ausgelegt ist.

3.   Schrank nach Anspruch 2, **dadurch gekennzeich-**

**net, dass** die Wärmedämmplatte (8) neben Silikatkristallen ein faserförmiges Material und ein Bindemittel aufweist.

4.   Schrank nach Anspruch 3, **dadurch gekennzeichnet, dass** es sich bei dem faserförmigen Material um Verstärkungsfasern aus beispielsweise Zellulose handelt.

5.   Schrank nach einem der Ansprüche 2 bis 4, **dadurch gekennzeichnet, dass** als Bindemittel Zement, Wasserglas oder dergleichen eingesetzt wird.

6.   Schrank nach einem der Ansprüche 1 bis 5, **dadurch gekennzeichnet, dass** als Silikat ein natürliches Calciumsilikat, wie beispielsweise Wollastonit, verwendet wird.

7.   Schrank nach einem der Ansprüche 1 bis 6, **dadurch gekennzeichnet, dass** zusätzlich zu den Silikatkristallen Füllmaterialien wie Siliziumdioxid, Calciumoxid, Dolomit etc. bei der Herstellung der Wärmedämmplatte (8) Verwendung finden.

8.   Schrank nach einem der Ansprüche 1 bis 7, **dadurch gekennzeichnet, dass** sich die Holzwerkstoffschicht (7) aus einer oder mehreren Holzwerkstoffplatten zusammensetzt.

9.   Schrank nach einem der Ansprüche 1 bis 8, **dadurch gekennzeichnet, dass** die Dichte der Holzwerkstoffschicht (7) unterhalb von 800 kg/m$^3$ angesiedelt ist.

10.  Schrank nach einem der Ansprüche 1 bis 9, **dadurch gekennzeichnet, dass** die Holzwerkstoffschicht (7) eine Materialstäke (s) aufweist, die in etwa ein Drittel bis zur Hälfte der Materialstärke (t) der Wärmedämmplatte (8) entspricht.

11.  Schrank nach einem der Ansprüche 1 bis 10, **dadurch gekennzeichnet, dass** die Wärmedämmplatte (8) mit der Holzwerkstoffplatte bzw. der Holzwerkstoffschicht (7) verbunden ist, beispielsweise durch Schrauben und/oder ein Adhäsivmittel.

12.  Schrank nach einem der Ansprüche 1 bis 11, **dadurch gekennzeichnet, dass** sich der Korpus (1, 2, 3, 4) aus Seitenwänden (3), Rückenwand (4), Kopfwand (1) und Bodenwand (2) zusammensetzt, wobei zumindest jede Seitenwand (3) den Sandwichaufbau aufweist.

13.  Schrank nach Anspruch 12, **dadurch gekennzeichnet, dass** neben den beiden Seitenwänden (3) zusätzlich die Rückenwand (4) sowie die Kopfwand (1) mit dem Sandwichaufbau ausgerüstet sind.

**14.** Schrank nach einem der Ansprüche 1 bis 13, **dadurch gekennzeichnet, dass** sich die Bodenwand (2) aus einer oder mehreren Mineralbauplatten (11) anstelle der Wärmedämmplatte (8) zusammensetzt.

**15.** Schrank nach einem der Ansprüche 1 bis 14, **dadurch gekennzeichnet, dass** sich die Stahlblechhülle (9) aus einzelnen miteinander gekoppelten Stahlblechplatten zusammensetzt.

**16.** Schrank nach einem der Ansprüche 1 bis 15, **dadurch gekennzeichnet, dass** die Wärmedämmplatte (8) hitzebeständig ausgebildet ist.

**17.** Schrank nach einem der Ansprüche 1 bis 16, **dadurch gekennzeichnet, dass** die Wärmedämmplatte (8) eine Dichte von weniger als 800 kg/m$^3$ und vorzugsweise eine Dichte von weniger als 600 kg/m$^3$ aufweist.

**Claims**

**1.** A fire protection cabinet, in particular safety cabinet, preferably hazardous material cabinet, with a body (1, 2, 3, 4) and with at least one door (5) connected to the body (1, 2, 3, 4), wherein for the most part, the body (1, 2, 3, 4) has a sandwich structure with at least one inwardly facing wooden composite layer (7) and one outwardly facing fire protection layer (8), and wherein the fire protection layer (8) is designed as one or more mineral-based thermal insulation boards (8),
**characterized in that**
the body (1, 2, 3, 4) is lined on the outside with a sheet steel shell (9) and is constructed completely and finally from the sandwich structure and the sheet steel shell (9) without further layers and without any spacing, that is, implemented, as viewed from the inside to the outside, are the wooden composite layer (7), the thermal insulation board(s) (8) and finally the sheet steel shell (9).

**2.** The cabinet according to claim 1, **characterized in that** the thermal insulation board (8) is designed to be silicate-based.

**3.** The cabinet according to claim 2, **characterized in that** the thermal insulation board (8) includes a fibrous material and a binder in addition to silicate crystals.

**4.** The cabinet according to claim 3, **characterized in that** the fibrous material is a reinforcing fiber made of, for example, cellulose.

**5.** The cabinet according to any one of claims 2 to 4, **characterized in that** cement, sodium silicate or the like is used as a binder.

**6.** The cabinet according to any one of claims 1 to 5, **characterized in that** a natural calcium silicate, such as wollastonite, is used as silicate.

**7.** The cabinet according to any one of claims 1 to 6, **characterized in that** in addition to the silicate crystals, filling materials, such as silicon dioxide, calcium oxide, dolomite, etc., are used in the production of the thermal insulation board (8).

**8.** The cabinet according to any one of claims 1 to 7, **characterized in that** the wooden composite layer (7) is composed of one or more wooden composite boards.

**9.** The cabinet according to any one of claims 1 to 8, **characterized in that** the density of the wooden composite layer (7) is below 800 kg/m$^3$.

**10.** The cabinet according to any one of claims 1 to 9, **characterized in that** the wooden composite layer (7) has a material thickness (s) which corresponds to approximately one third to one half of the material thickness (t) of the thermal insulation board (8).

**11.** The cabinet according to any one of claims 1 to 10, **characterized in that** the thermal insulation board (8) is connected to the wooden composite board or wooden composite layer (7) by, for example, screws and/or an adhesive.

**12.** The cabinet according to any one of claims 1 to 11, **characterized in that** the body (1, 2, 3, 4) is composed of side walls (3), back wall (4), top wall (1) and bottom wall (2), at least each side wall (3) having the sandwich structure.

**13.** The cabinet according to claim 12, **characterized in that** in addition to the two side walls (3), the back wall (4) and the top wall (1) are also equipped with the sandwich structure.

**14.** The cabinet according to any one of claims 1 to 13, **characterized in that** the bottom wall (2) is composed of one or more mineral-based building boards (11) instead of the thermal insulation board (8).

**15.** The cabinet according to any one if claims 1 to 14, **characterized in that** the sheet steel shell (9) is composed of individual sheet steel plates coupled together.

**16.** The cabinet according to any one of claims 1 to 15, **characterized in that** the thermal insulation board (8) is designed to be heat-resistant.

**17.** The cabinet according to any one of claims 1 to 16, **characterized in that** the thermal insulation board (8) has a density of less than 800 kg/m$^3$ and preferably a density of less than 600 kg/m$^3$.

## Revendications

**1.** Armoire de protection contre l'incendie, en particulier armoire de sécurité, de préférence armoire pour substances dangereuses, avec un corps (1, 2, 3, 4) et avec au moins une porte (5) raccordée au corps (1, 2, 3, 4), sachant que le corps (1, 2, 3, 4) comporte pour la majeure partie une structure en sandwich avec au moins une couche en matériau dérivé du bois (7) tournée vers l'intérieur et une couche pare-feu (8) tournée vers l'extérieur et sachant que la couche pare-feu (8) est constituée sous la forme d'un ou plusieurs panneaux thermo-isolants (8) à base minérale,
**caractérisée en ce que**
le corps (1, 2, 3, 4) est revêtu extérieurement d'une enveloppe en tôle d'acier (9) et est structuré complètement et finalement à partir de la structure en sandwich et de l'enveloppe en tôle d'acier (9) sans autres couches ni intervalle, c'est-à-dire, que la couche en matériau dérivé du bois (7), le(s) panneau(x) thermo-isolant(s) (8) et finalement l'enveloppe en tôle d'acier (9) sont réalisés vus de l'intérieur vers l'extérieur.

**2.** Armoire selon la revendication 1, **caractérisée en ce que** le panneau thermo-isolant (8) est conçu à base de silicate.

**3.** Armoire selon la revendication 2, **caractérisée en ce que** le panneau thermo-isolant (8) comporte en plus de cristaux de silicate, un matériau fibreux et un liant.

**4.** Armoire selon la revendication 3, **caractérisée en ce que** concernant le matériau fibreux, il s'agit de fibres de renfort, par exemple, en cellulose.

**5.** Armoire selon l'une quelconque des revendications 2 à 4, **caractérisée en ce que** du ciment, du verre soluble ou un matériau analogue est utilisé en tant que liant.

**6.** Armoire selon l'une quelconque des revendications 1 à 5, **caractérisée en ce qu'**un silicate de calcium naturel, comme par exemple la wollastonite, est utilisé en tant que silicate.

**7.** Armoire selon l'une quelconque des revendications 1 à 6, **caractérisée en ce qu'**en plus des cristaux de silicate, des matériaux de remplissage comme le dioxyde de silicium, l'oxyde de calcium, la dolomite etc. sont utilisés pour la fabrication du panneau thermo-isolant (8).

**8.** Armoire selon l'une quelconque des revendications 1 à 7, **caractérisée en ce que** la couche en matériau dérivé du bois (7) est composée d'un ou de plusieurs panneaux en matériau dérivé du bois.

**9.** Armoire selon l'une quelconque des revendications 1 à 8, **caractérisée en ce que** la densité de la couche en matériau dérivé du bois (7) est située en dessous de 800 kg/m$^3$.

**10.** Armoire selon l'une quelconque des revendications 1 à 9, **caractérisée en ce que** la couche en matériau dérivé du bois (7) comporte une épaisseur de matériau (s), qui correspond à peu près à un tiers jusqu'à la moitié de l'épaisseur de matériau (t) du panneau thermo-isolant (8).

**11.** Armoire selon l'une quelconque des revendications 1 à 10, **caractérisée en ce que** le panneau thermo-isolant (8) est relié au panneau en matériau dérivé du bois ou à la couche en matériau dérivé du bois (7), par exemple par des vis et/ou un agent adhésif.

**12.** Armoire selon l'une quelconque des revendications 1 à 11, **caractérisée en ce que** le corps (1, 2, 3, 4) est composé de parois latérales (3), de paroi arrière (4), de paroi frontale (1) et de paroi de fond (2), sachant qu'au moins chaque paroi latérale (3) comporte la structure en sandwich.

**13.** Armoire selon la revendication 12, **caractérisée en ce qu'**à côté des deux parois latérales (3), la paroi arrière (4) et la paroi frontale (1) sont équipées en plus de la structure en sandwich.

**14.** Armoire selon l'une quelconque des revendications 1 à 13, **caractérisée en ce que** la paroi de fond (2) est composée d'un ou de plusieurs panneaux de construction minéraux (11) à la place du panneau thermo-isolant (8).

**15.** Armoire selon l'une quelconque des revendications 1 à 14, **caractérisée en ce que** l'enveloppe en tôle d'acier (9) est composée de panneaux en tôle d'acier couplés individuellement les uns aux autres.

**16.** Armoire selon l'une quelconque des revendications 1 à 15, **caractérisée en ce que** le panneau thermo-isolant (8) est constitué thermorésistant.

**17.** Armoire selon l'une quelconque des revendications 1 à 16, **caractérisée en ce que** le panneau thermo-isolant (8) comporte une densité inférieure à 800 kg/m$^3$ et de préférence une densité inférieure à 600 kg/m$^3$.

Fig.1

_Fig.2_

_Fig.3_

_Fig.4_

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011000258 B4
- DE 102008052329 A1
- DE 29500142 U1
- DE 60103688 T2